**Europäisches Patentamt**

**European Patent Office**

**Office européen des brevets**

(11) Veröffentlichungsnummer : **0 136 483**
**B1**

(12) EUROPÄISCHE PATENTSCHRIFT

(45) Veröffentlichungstag der Patentschrift :
15.03.89

(51) Int. Cl.⁴ : **G 01 C 22/00**

(21) Anmeldenummer : **84109469.1**

(22) Anmeldetag : **09.08.84**

(54) Wegmessgerät.

(30) Priorität : **01.10.83 DE 3335722**

(43) Veröffentlichungstag der Anmeldung :
**10.04.85 Patentblatt 85/15**

(45) Bekanntmachung des Hinweises auf die Patenterteilung : **15.03.89 Patentblatt 89/11**

(84) Benannte Vertragsstaaten :
**BE CH FR GB IT LI NL SE**

(56) Entgegenhaltungen :
**US-A- 4 101 762**
**US-A- 4 156 131**

(73) Patentinhaber : **Jost-Werke GmbH**
**Siemensstrasse 2**
**D-6078 Neu Isenburg (DE)**

(72) Erfinder : **Dreyer, Hans**
**Wolfgang-Borcher-Strasse 13**
**D-6073 Egelsbach-Bayerseich (DE)**
Erfinder : **Rieger, Manfred**
**Im Sachsenlager 10**
**D-6000 Frankfurt/Main (DE)**

(74) Vertreter : **Köhler, Günter, Dipl.-Ing.**
**Nordring 1**
**D-6458 Rodenbach (DE)**

## Beschreibung

Die Erfindung bezieht sich auf ein Wegmeßgerät mit einem topfartigen Gehäuse, das koaxial an einer Achskappe eines Fahrzeugs anbringbar ist, mit einem in dem Gehäuse relativ zu diesem drehbar gelagerten etwa topfartigen Träger für ein Zählwerk mit Zahlrollen, deren Achse quer zur in der Einbaulage horizontalen Drehachse des Gehäuses in dem Träger gelagert ist, mit einem Untersetzungsgetriebe, durch das die relative Drehung von Gehäuse und Träger auf die Zahlrollen übertragbar ist, wobei das Untersetzungsgetriebe ein Umlenkgetriebe und ein Schrittschaltwerk aufweist, mit wenigstens einer Kugel aus Schwermetall, die den Zahlrollen etwa diametral in bezug auf die Gehäuse-Drehachse gegenüber in einer Kammer des Trägers verschiebbar gelagert und schwerer als das Zählwerk ist.

Bei einem bekannten Wegmeßgerät dieser Art (US-A-4 156 131), das auch Hubodometer genannt wird, liegen die Kugeln oberhalb und das Zählwerk unterhalb der Drehachse des Gehäuses. Die Kugeln können in ihrer Kammer im wesentlichen nur eine Radialbewegung in bezug auf die Gehäuse-Drehachse ausführen, und die Horizontallage des Zählwerks bei der Drehung des Gehäuses wird dadurch sichergestellt, daß der Massenschwerpunkt des aus Metall bestehenden Trägers (auch « Rotor » genannt) unterhalb der Gehäuse-Drehachse liegt. Auf der Rückseite des Trägerbodens ist ein Schrittschaltwerk gelagert, das durch eine mit dem Gehäuse um dessen Drehachse rotierende Exzenterscheibe über eine Kulisse angetrieben wird. Das Umlenkgetriebe besteht aus einem auf der Vorderseite des Trägerbodens gelagerten Schneckengetriebe. Hierbei ergibt sich zwar ein in Richtung der Drehachse des Gehäuses verhältnismäßig flacher Aufbau des Wegmeßgeräts, wie er zur Einhaltung einer möglichst geringen Spurweite des mit dem Wegmeßgerät versehenen Kraftfahrzeugs erwünscht ist, doch ist die axiale Dicke des Wegmeßgeräts wegen der Ausbildung des Untersetzungsgetriebes immer noch verhältnismäßig groß. Ferner ist auf seiten des Trägers ein verhältnismäßig hoher Materialaufwand erforderlich, um ein Gegengewicht für die oberhalb der Gehäuse-Drehachse angeordneten Kugeln zu schaffen, das sicherstellt, daß das Gewicht der Kugeln keine Drehung des Trägers und damit eine Umkehrung des Zählwerks in der Ruhelage bewirkt.

Sodann ist ein Wegmeßgerät bekannt (US-PS 3 130 907), bei dem sieben Kugeln in einer hinter dem Zählwerk liegenden Ebene in einem Ringkanal, der die Gehäuse-Drehachse vollständig umgibt, gelagert sind. Hierbei liegen in der Ruhelage die meisten Kugeln ebenso wie das Zählwerk unterhalb der Gehäuse-Drehachse, um einen möglichst tief unterhalb dieser Drehachse liegenden Schwerpunkt des Trägers und seiner Einbauteile zu erzielen. Bei dieser Ausbildung ist die axiale Dicke des Meßgeräts übermäßig groß.

Der Erfindung liegt die Aufgabe zugrunde, ein Meßgerät der gattungsgemäßen Art anzugeben, das bei weitgehend stabiler Drehwinkellage des Trägers im gesamten Drehzahlbereich des Fahrzeugrades, dessen zurückgelegter Weg gemessen werden soll, in Axialrichtung eine geringere Dicke und einen geringeren Materialaufwand bei einfacherer Herstellbarkeit aufweist.

Erfindungsgemäß ist diese Aufgabe dadurch gelöst, daß die Kugel unterhalb der Gehäuse-Drehachse in einer teilweise um die Gehäuse-Drehachse herum verlaufenden Führungsbahn zwischen zwei in der Führungsbahn angeordneten Druckfedern angeordnet ist und das Untersetzungsgetriebe in einem Raum zwischen der Führungsbahn und den Zahlrollen ein Rädergetriebe aufweist.

Bei dieser Ausbildung liegen alle sperrigen Einbauteile des Trägers praktisch in einer Vertikalebene, die senkrecht zur Gehäuse-Drehachse steht, so daß sich in Richtung der Gehäuse-Drehachse ein sehr flacher Aufbau des Wegmeßgeräts ergibt. Die Kugel sorgt im wesentlichen allein dafür, daß der Gesamtschwerpunkt des Trägers und seiner Einbauteile unterhalb der Gehäuse-Drehachse liegt, so daß der Materialaufwand auf seiten des Trägers verhältnismäßig gering ist. Dennoch ist eine weitgehend stabile Drehwinkellage des Trägers sichergestellt, in der die Achse der Zahlrollen horizontal steht, da selbst bei einer stoßartigen Beschleunigung des Wegmeßgeräts quer zur Gehäuse-Drehachse sei es in Horizontal- oder in Vertikalrichtung, die Auslenkung der Kugel durch die Druckfedern gedämpft und wieder rückgängig gemacht wird, wobei die Druckfedern zusätzlich zur Schwerkraft der Kugel dafür sorgen, daß die Kugel eine möglichst tiefe Lage unterhalb der Drehachse einnimmt. Die Kugel hält daher die Lage des Trägers und damit auch die des Zählwerks über den gesamten Drehzahlbereich des Gehäuses, von der niedrigsten bis zur höchsten Drehzahl, weitgehend stabil, ohne daß sich der Träger nennenswert in bezug auf beispielsweise eine horizontale Ebene verdreht.

Vorzugsweise hat die Führungsbahn etwa die Form eines Teilkreises. Eine solche Bahn ist leicht herzustellen und ergibt einen verhältnismäßig großen Raum zwischen Zählwerk und Führungsbahn zur Unterbringung des Rädergetriebes. Die Zahl und der Durchmesser der Räder des Rädergetriebes kann daher in weiten Grenzen variiert werden, um das Untersetzungsverhältnis des Untersetzungsgetriebes an den Durchmesser des jeweiligen Kraftfahrzeugrades anzupassen.

Sodann können zwischen den Druckfedern zwei Kugeln angeordnet sein. Diese verlagern den Gesamtschwerpunkt des Trägers und seiner Einbauteile nicht nur noch weiter nach unten unter die Gehäuse-Drehachse, so daß sich schon aus diesem Grunde eine entsprechend stabilere Drehwinkellage des Trägers ergibt, sondern sie erhöhen auch die Lagestabilität des Trägers gegenüber vertikalen Stößen, da die Kugeln gegebenenfalls in der Führungsbahn auseinanderlaufen und nach oben beschleunigt werden, wobei sich ihre Reaktionskräfte gegenseitig weitgehend aufheben und der Träger auch gegenüber solchen vertikalen Stoßkräften eine noch höhere Lagestabilität aufweist.

Die Druckfedern können in einfacher Weise Schraubenfedern sein. Es ist aber auch möglich, sie aus einem anderen elastischen Material, wie massivem oder porösem Kunststoff, herzustellen.

Vorzugsweise ist das Material der Kugel oder Kugeln Stahl. Derartige Kugeln sind handelsüblich und daher kostengünstig. Sie können ferner mit äußerst glatter Oberfläche ausgebildet werden, so daß ihre Reibung in der Führungsbahn weitgehend vernachlässigbar ist.

Es ist aber auch möglich, ein Kugelmaterial zu wählen, das diamagnetisch und spezifisch schwerer als Stahl ist. Ein solches Material, z. B. Blei, ermöglicht die Herstellung von Kugeln mit kleinerem Durchmesser als die einer Stahlkugel mit gleichem Gewicht, so daß der radiale Abstand der Kugel von der Gehäuse-Drehachse bei gleichem Durchmesser des Trägers größer und damit das Trägheitsmoment der Kugel in bezug auf diese Drehachse erhöht wird. Gleichzeitig wird auf diese Weise verhindert, daß sich die Kugel durch ein äußeres Magnetfeld, sei es unabsichtlich oder absichtlich, in der Führungsbahn verschieben und damit der Träger drehen läßt.

Sodann kann dafür gesorgt sein, daß die Relativdrehung von Gehäuse und Träger über das Rädergetriebe auf das Umlenkgetriebe und von diesem über das Schrittschaltwerk auf die niedrigststellige Zahlrolle übertragen wird. Bei dieser Ausbildung liegt die Ebene der Räder des Rädergetriebes senkrecht zur Gehäuse-Drehachse, so daß leicht das gewünschte Zahnrad an der gewünschten Stelle von der offenen Vorderseite des Trägers her in diesem eingesetzt werden kann. Gegegebenenfalls ist auch ein leichter Wechsel der Räder des Rädergetriebes möglich, um das Untersetzungsverhältnis des Untersetzungsgetriebes zu ändern. Hierbei kann der Durchmesser der Räder weitgehend unabhängig von der axialen Dicke des Wegmeßgeräts gewählt werden.

Vorzugsweise ist der Träger aus elastischem Kunststoff hergestellt. Dies ermöglicht nicht nur eine einfache Herstellung des Trägers, sondern ergibt auch eine zusätzliche Abfederung des Getriebes gegen Stöße.

Günstig ist es hierbei, wenn die letzte Achse des Rädergetriebes am Boden des Trägers angespritzt ist. Auf diese Weise können die Achse und der Träger in einem Stück hergestellt werden. Besondere Sicherungsmittel für die Achse entfallen dann.

Ferner können die Lager aller Achsen des Zählwerks in Richtung der Gehäuse-Drehachse offene Taschen sein, die nach Einführung dieser Achsen durch Warmverformung zumindest teilweise geschlossen sind. Auch hierbei ergibt sich eine einteilige Ausbildung von Träger und Achslager ohne zusätzliche Sicherungsmittel für die Achsen.

Bei einem Wegmeßgerät mit einer den Träger verschliessenden, ein Fenster für die Sicht auf die Zahlrollen aufweisenden. Frontplatte mit Befestigungslöchern können am Träger Zapfen zum Befestigen der Frontplatte angeformt, durch die Befestigungslöcher der Frontplatte hindurchgeführt und warmverformt sein. Auch hierbei entfallen Befestigungsmittel wie Schrauben oder Nieten, zum Befestigen der Frontplatte.

Die Erfindung und ihre Weiterbildungen werden nachstehend anhand der Zeichnung bevorzugter Ausführungsbeispiele näher beschrieben. Es zeigen :

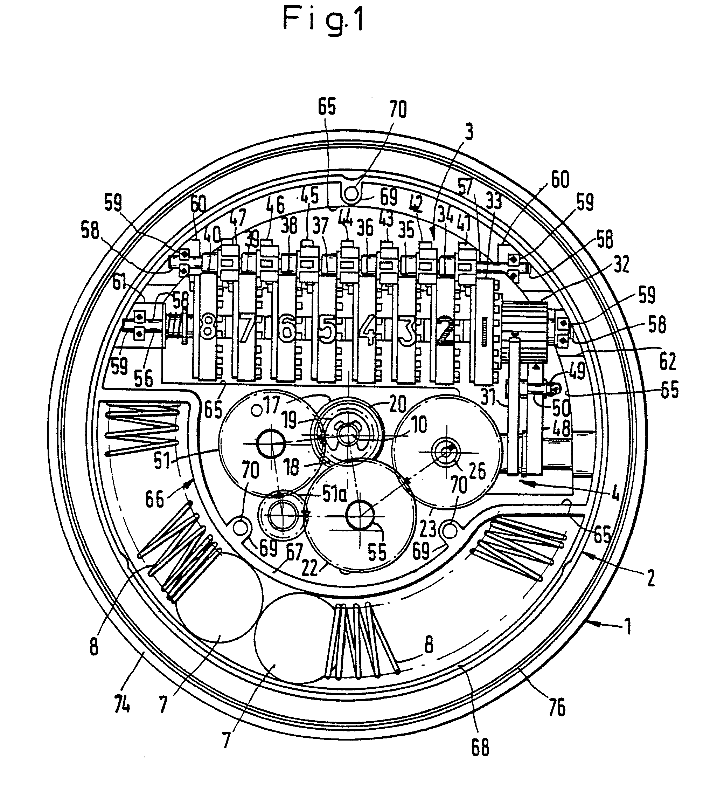

Fig. 1 eine Vorderansicht eines ersten Ausführungsbeispiels eines erfindungsgemäßen Wegmeßgeräts vor der Anbringung von Frontplatte und Deckel,

Fig. 2 einen vertikalen Axialschnitt durch das Wegmeßgerät nach Fig. 1 bei angebrachter Frontplatte und eingesetztem Deckel und

Fig. 3 einen horizontalen Axialschnitt durch ein zweites Ausführungsbeispiel eines erfindungsgemäßen Wegmeßgeräts, das sich von dem nach den Fig. 1 und 2 nur in einem rückseitigen Lagerzapfen unterscheidet.

Die Hauptbestandteile der dargestellten Wegmeßgeräte sind ein topfförmiges Gehäuse 1 aus Stahl, ein im Gehäuse 1 drehbar gelagerter, etwa topfförmiger Träger 2 aus elastischem Kunststoff, ein Zählwerk 3 aus Kunststoff, ein Untersetzungsgetriebe 4, eine Frontplatte 5 aus Blech, ein durchsichtiger Deckel 6 aus Kunststoff, zwei gleiche Kugeln 7 aus Stahl und zwei gleiche Druckfedern 8 aus schraubenlinienförmig gewundenem Federstahldraht.

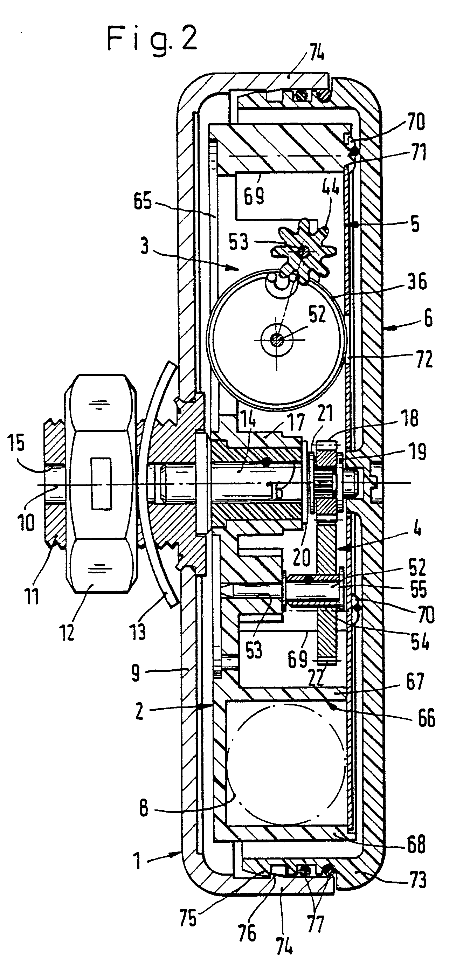

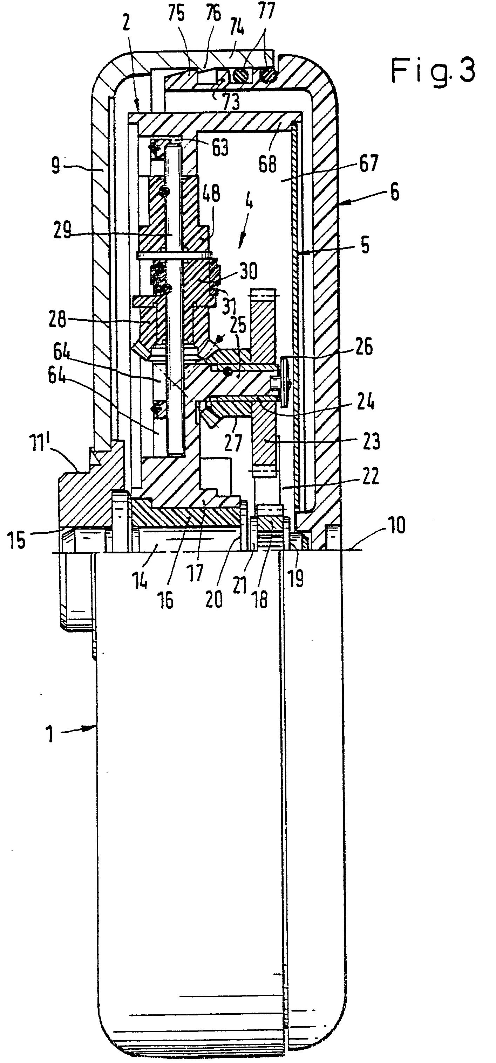

Das Gehäuse 1 hat nach Fig. 2 auf seiner Rückseite einen im Gehäuseboden 9 koaxial zur Drehachse 10 des Gehäuses 1 befestigten Lagerzapfen 11 mit Außengewinde, Befestigungsmutter 12 und federnder Unterlegscheibe 13. Mittels des Lagerzapfens 11 und der Mutter 12 wird das Gehäuse 1 koaxial an einer nicht dargestellten Achskappe befestigt, die mit einer Radnabe eines Fahrzeugs verbunden ist und sich auf diese Weise zusammen mit dem Fahrzeugrad dreht. Bei dem Ausführungsbeispiel nach Fig. 3 wird das Gehäuse 1 mit seinem Umfang in einer topfförmigen Achskappe drehfest eingepaßt. Hier ist der Lagerzapfen 11' daher ohne Außengewinde ausgebildet.

Der Träger 2 ist auf einem Zapfen 14 mit Ringflansch drehbar gelagert. Der Zapfen 14 ist einerseits in einer koaxialen Bohrung 15 des Lagerzapfens 11 bzw. 11' drehfest eingepreßt und andererseits in einer Gleitlagerbuchse 16 aus elastischem Kunststoff drehbar gelagert. (Alle Gleitlagerflächen sind in der Zeichnung durch einen Punkt markiert.) Die Gleitlagerbuchse 16 ist in einer zur Gehäuseachse 10 koaxialen Bohrung eines zylindrischen Bodenfortsatzes 17 des Trägers 2 eingepreßt. Auf dem im Innenraum des Trägers 2 liegenden Ende des Zapfens 14 ist ein Ritzel 18 mittels Seegerring 19 gesichert. Zwischen Ritzel 18 und Bodenfortsatz 17 sind zwei Unterlegscheiben 20, 21 gelagert. Das Ritzel 18 kämmt mit einem Zahnrad 22, das seinerseits mit einem Zahnrad 23 kämmt. Das Zahnrad 23 sitzt drehfest auf einer Gleitlagerbuchse 24, die ihrerseits auf einer am Boden des Trägers 2 angespritzten Achse 25 drehbar gelagert ist. Auf der Achse 25 sitzt ein die Lage des Zahnrads 23 sichernder Sicherungsring 26, der seinerseits durch Ultraschall-Warmverformung des freien Endes der Achse 25 gesichert ist. Auf der Gleitlagerbuchse 24 ist ferner ein Kegelrad 27 aus Kunststoff drehfest gelagert, das mit einem Kegelrad 28 aus Kunststoff kämmt. Das Kegelrad 28 sitzt drehfest auf der Nabe einer exzentrisch auf einer Achse 29 (Fig. 3) gelagerten Scheibe 30, die drehbar in einem kreisförmigen Loch am einen Ende einer Stoßschaltklinke 31 gelagert ist. Die Stoßschaltklinke 31 greift mit einem Zahn an ihrem freien Ende in eine Umfangsverzahnung einer ein Schaltrad bildenden Nabe 32 der Zahlrolle 33 der niedrigsten Dezimalstelle des Zählwerks 3, das acht hintereinandergeschaltete Zahlrollen 33 bis 40 mit dazwischengeschalteten Zahnrädern 41 bis 47 zur Übertragung des Dezimalübertrags aufweist. Jedes der Zahnräder 41 bis 47 bewirkt in an sich bekannter Weise nach jeder Umdrehung der Zahlrolle der vorhergehenden Dezimalstelle eine Weiterdrehung der Zahlrolle der folgenden Dezimalstelle um einen Schritt bzw. eine Dezimalzahl. Auf der Achse 29 ist ferner eine Sperrklinke 48 drehbar gelagert, die mit einem Zahn an ihrem freien Ende auf der der Stoßschaltklinke 31 gegenüberliegenden Seite des Schaltrads 32 eingreift. Beide Klinken 31, 48 werden durch eine Zugfeder 49 zusammengezogen und gegen das Schaltrad 32 gedrückt. Die Zugfeder 49 ist an seitlichen Zapfen 50 der Klinken 31, 48 eingehängt.

Das Rädergetriebe 18, 22, 23 kann zwei zusätzliche Zahnräder 51, 51a aufweisen, die die Drehung des Ritzels 18 auf das Zahnrad 22 oder ein anderes Zwischenzahnrad übertragen, wobei dann das Zahnrad 22 bzw. Zwischenzahnrad nicht mit dem Ritzel 18 kämmt. Auf diese Weise ergibt sich ein anderes Untersetzungsverhältnis des Untersetzungsgetriebes 4, um das Zählwerk 3 an ein Fahrzeugrad mit einem anderen Durchmesser anzupassen.

Die aus Metall bestehende, im Durchmesser abgestufte Achse 52 des Zahnrads 22 ist mit ihrem dünneren Abschnitt in eine Bohrung 53 eines inneren Bodenfortsatzes des Trägers 2 gepreßt. Das Zahnrad 22 ist seinerseits auf einer Gleitlagerbuchse 54 aus Kunststoff drehfest gelagert, die ihrerseits auf dem dikkeren Abschnitt der Achse 52 dehbar gelagert ist. Ein Sicherungsring 55 sichert die Lage von Zahnrad 22 und Gleitlagerbuchse 54. Um das Zahnrad 22 auszuwechseln, wird die Achse 52 durch Erfassen des Zahnrads 22 unter Überwindung des Preßsitzes aus der Bohrung 53 herausgezogen und eine vormontierte Einheit, bestehend aus Teilen 52, 54, 55 und einem anderen Zahnrad (22), wieder in die Bohrung 53 gepreßt. Die Zahnräder 51, 51a sind auf die gleiche Weise gelagert und auswechselbar. Daher kann ein rascher Zahnradwechsel erfolgen, um das Untersetzungsverhältnis des Getriebes zur Anpassung an andere Fahrzeugraddurchmesser zu ändern.

Das Zählwerk 3 ist auf Achsen 56 und 57 gelagert, deren Enden in Taschen 58 des Trägers 2 drehbar gelagert sind. Diese Taschen 58 sind nach Einführung der Achsen 56, 57 durch Ultraschall-Warmverformung zur Lagesicherung der Achsen 56, 57 zumindest teilweise verschlossen. Bei dieser Verformung entstehen die Achsen übergreifende Verformungslappen 59. (Alle Warmverformungsstellen sind in der Zeichnung durch schwarze Rechtecke markiert.) Die Taschen 58 sind in Bodenvorsprüngen 60, 61 und 62 ausgebildet.

Auch die Achse 29 ist in entsprechenden Taschen 63 und 64 des Trägers 2 gelagert.

Der Träger 2 weist im Bereich des oberhalb der Drehachse 10 liegenden Zählwerks 3 und der Klinken 31, 48 einen Durchbruch 65 auf, der den hinteren Teil des Zählwerks 3 aufnimmt. In seinem unterhalb der Drehachse 10 liegenden Randbereich ist der Träger 2 mit einer nach vorn offenen kreisförmigen Führungsbahn 66 versehen, die durch eine innere Wand 67 und die Umfangswand 68 des Trägers 2 begrenzt ist. Der Krümmungsmittelpunkt der Führungsbahn 66 fällt mit der Drehachse 10 zusammen. Die Führungsbahn 66 umgibt die Drehachse 10 auf der einen Seite einer mit der Drehachse 10 zusammenfallenden Vertikalebene um etwas mehr als 90° und auf der anderen Seite um etwas weniger als 90°, insgesamt also um nahezu 180°. In dieser Führungsbahn 66 sind die Druckfedern 8 und zwischen diesen die Kugeln 7 angeordnet. Dabei sind die Kugeln 7 in der Führungsbahn 66 gegen die Kraft der Druckfedern 8 verschiebbar.

Auf der Innenseite der Umfangswand 68 und der Wand 67 der Führungsbahn 66 sind drei radial nach innen ragende Rippen 69 angeformt. An der Vorderseite dieser Rippen 69 sind Zapfen 70 angeformt, die, nachdem das Zählwerk 3 und das Untersetzungsgetriebe 4 im Träger 2 eingebaut worden sind, durch Befestigungslöcher 71 in der Frontplatte 5 geführt und durch Ultraschall warmverformt werden, wie Fig. 2 zeigt. Die Zapfen 70 sichern daher wie ein Nietkopf die Lage der Frontplatte 5.

Die Frontplatte 5 hat in Höhe der Zahlrollen 33 bis 40 einen Durchbruch 72, der als Fenster wirkt und die Sicht auf die Zahlrollen 33 bis 40 freiläßt.

Nachdem die Frontplatte 5 angebracht worden ist, wird der durchsichtige Deckel 6 mit seiner Umfangswand 73 in den Spalt zwischen der Umfangswand 68 des Trägers 2 und der Umfangswand 74 des Gehäuses 1 eingesetzt, wobei eine Hinterschneidung 75 auf der Außenseite der Umfangswand 73 hinter einer Hinterschneidung 76 auf der Innenseite der Umfangswand 74 einrastet. In Ringnuten auf der Außenseite der Umfangswand 73 eingesetzte Dichtringe 77 bewirken eine Abdichtung des Innenraums des Gehäuses 1 gegen das Eindringen von Feuchtigkeit und Staub. Gleichzeitig gestatten die Dichtringe 77 einen Ausgleich von Druckspannungen in der Umfangswand 74 des Gehäuses 1, wenn dieses in eine Achskappe eingepreßt wird. Vor dem Einsetzen des Deckels 6 wird der Innenraum des Gehäuses 1 mit Stickstoff gefüllt.

Wie die Darstellungen zeigen, liegt das Untersetzungsgetriebe 4 in dem Raum zwischen Zählwerk 3 und Führungsbahn 66, wobei der Schwerpunkt des Getriebes unterhalb der Drehachse 10 liegt. Die Hauptbauteile des Wegmeßgeräts liegen daher im wesentlichen in der gleichen Ebene, was einen in Richtung der Drehachse 10 kompakten und flachen Aufbau ergibt. Da das Zählwerk 3 aus Kunststoff besteht, hat es ein sehr geringes Gewicht, wobei das Gewicht bereits einer Kugel 7 wesentlich größer als das des Zählwerks 3 ist. Wegen des Durchbruchs 65 im Boden des Trägers 2 liegt auch der Schwerpunkt des Trägers 2 unterhalb der Drehachse 10.

Wenn das Gehäuse 1 während der Fahrt des Fahrzeugs durch das Fahrzeugrad über die Achskappe um die Drehachse 10 gedreht wird, behält der Träger 2 mitsamt den eingebauten Teilen — da ihr Gesamtschwerpunkt weit unterhalb der Drehachse 10 liegt — seine räumliche Lage im wesentlichen bei, und zwar über den gesamten Drehzahlbereich des Fahrzeugrades. Dabei dreht sich das mit dem Gehäuse 1 starr verbundene Ritzel 18 relativ zum Träger 2, so daß seine Drehung durch die übrigen Getrieberäder und das Schrittschaltwerk 31, 32, 48 bis 50 auf das Zählwerk 3 übertragen wird. Sollte während des Betriebs eine geringfügige Verdrehung des Zählwerks 3 aus seiner dargestellten Horizontallage aufgrund von Reibung erfolgen, dann wird es spätestens im Stillstand wieder in die Horizontallage zurückgestellt, in der der Zählerstand leicht ablesbar ist. Eine Stoßbelastung des Wegmeßgeräts, sei es aufgrund von Anfahr- oder Abbremsvorgängen des Fahrzeugs oder Unebenheiten des Erdbodens, die zu einer Verdrehung des Trägers 2 aus der dargestellten Ruhelage führt, und zwar aufgrund seiner eigenen Massenträgheit und der der in ihm eingebauten Teile, insbesondere der Kugeln 7, wird insbesondere durch die hohe Masse der Kugeln 7 wieder rückgängig gemacht, da diese stets bestrebt sind, die tiefste Lage in der Führungsbahn 66 einzunehmen, wobei sie den Träger 2 mitdrehen. Diese Rückstellung der Kugeln 7 in die tiefste Lage wird noch durch die Druckfedern 8 unterstützt, die bestrebt sind, die Kugeln 7 zwischen sich in der Führungsbahn 66 zu zentrieren. Den Kugeln 7 gelingt es aufgrund der unsymmetrischen Anordnung der Führungsbahn 66 in bezug auf die mit der Drehachse 10 zusammenfallende Vertikalebene nicht, in der Ruhelage den tiefsten Punkt unter der Drehachse 10 einzunehmen, wobei ihr gemeinsamer Schwerpunkt stets auf der einen Seite dieser Vertikalebene bleibt. Dennoch nehmen die Achsen 56, 57 des Zählwerks 3 (und damit das Zählwerk selbst) eine Horizontallage ein, weil der Schwerpunkt des Untersetzungsgetriebes 4 in der Ruhelage auf der anderen Seite dieser Vertikalebene liegt. Die Druckfedern bewirken gleichzeitig eine Dämpfung einer Auslenkbewegung der Kugeln 7, wobei sie beim Auftreten eines vertikalen Stoßes auf das Wegmeßgerät einer Aufwärtsbewegung der Kugeln 7 in entgegengesetzten Richtungen in der Führungsbahn 66 entgegenwirken.

Anstelle zweier Kugeln 7 kann auch nur eine vorgesehen sein. Ferner braucht die Führungsbahn 66 nicht kreisförmig zu sein. Vielmehr kann sie auch eine andere Krümmung oder einen etwa V-förmig geknickten Verlauf aufweisen. Die Federkraft der Druckfedern 8 sollte möglichst gering sein. Die Kugeln 7 können auch aus einem diamagnetischen Schwermetall, wie Blei, hergestellt sein, um eine absichtliche oder unabsichtliche Drehung des Trägers 2 durch ein an den Kugeln 7 vorbeibewegtes äußeres Magnetfeld, insbesondere Drehfeld, zu vermeiden.

**Patentansprüche**

1. Wegmeßgerät mit einem topfartigen Gehäuse (1), das koaxial an einer Achskappe eines Fahrzeugs anbringbar ist, mit einem in dem Gehäuse (1) relativ zu diesem drehbar gelagerten etwa topfartigen Träger (2) für ein Zählwerk (3) mit Zahlrollen (33 bis 40), deren Achse (56) quer zur in der Einbaulage horizontalen Drehachse (10) des Gehäuses (1) in dem Träger (2) gelagert ist, mit einem Untersetzungsgetriebe (4), durch das die relative Drehung von Gehäuse (1) und Träger (2) auf die Zahlrollen (33 bis 40) übertragbar ist, wobei das Untersetzungsgetriebe (4) ein Umlenkgetriebe (27, 28) und ein Schrittschaltwerk (31, 32, 48) aufweist, mit wenigstens einer Kugel (7) aus Schwermetall, die den Zahlrollen (33 bis 40) etwa diametral in bezug auf die Gehäuse-Drehachse (10) gegenüber in einer Kammer des Trägers (2) verschiebbar gelagert und schwerer als das Zählwerk (3) ist, dadurch gekennzeichnet, daß die Kugel (7) unterhalb der Gehäuse-Drehachse (10) in einer teilweise um die Gehäuse-Drehachse (10) herum verlaufenden Führungsbahn (66) zwischen zwei in der Führungsbahn (66) angeordneten Druckfedern (8) angeordnet ist und das Untersetzungsgetriebe (4) in einem Raum zwischen der Führungsbahn (66) und den Zahlrollen (33 bis 40) ein Rädergetriebe (18, 22, 23) aufweist.

2. Wegmeßgerät nach Anspruch 1, dadurch gekennzeichnet, daß die Führungsbahn (66) etwa die Form eines Teilkreises aufweist.

3. Wegmeßgerät nach Anspruch 1 oder 2, dadurch gekennzeichnet, daß zwischen den Druckfedern (8) zwei Kugeln (7) angeordnet sind.

4. Wegmeßgerät nach einem der Ansprüche 1 bis 3, dadurch gekennzeichnet, daß die Druckfedern (8) Schraubenfedern sind.

5. Wegmeßgerät nach einem der Ansprüche 1 bis 4, dadurch gekennzeichnet, daß das Material der Kugel(n) (7) Stahl ist.

6. Wegmeßgerät nach einem der Ansprüche 1 bis 5, dadurch gekennzeichnet, daß das Kugelmaterial diamagnetisch und spezifisch schwerer als Stahl ist.

7. Wegmeßgerät nach einem der Ansprüche 1 bis 6, dadurch gekennzeichnet, daß die Relativdrehung von Gehäuse (1) und Träger (2) über das Rädergetriebe (18, 22, 23) auf das Umlenkgetriebe (27, 28) und von diesem über das Schrittschaltwerk (31, 32, 48) auf die niedrigststellige Zahlrolle (33) übertragen wird.

8. Wegmeßgerät nach einem der Ansprüche 1 bis 7, dadurch gekennzeichnet, daß das Umlenkgetriebe ein Kegelradgetriebe (27, 28) ist.

9. Wegmeßgerät nach einem der Ansprüche 1 bis 8, dadurch gekennzeichnet, daß der Träger (2) aus elastischem Kunststoff hergestellt ist.

10. Wegmeßgerät nach Anspruch 9, dadurch gekennzeichnet, daß die letzte Achse (25) des Rädergetriebes (18, 22, 23) am Boden des Trägers (2) angespritzt ist.

11. Wegmeßgerät nach Anspruch 9 oder 10, dadurch gekennzeichnet, daß die Lager aller Achsen (56, 57) des Zählwerks (3) in Richtung der Gehäuse-Drehachse (10) offene Taschen (58) sind, die nach Einführung dieser Achsen durch Warmverformung zumindest teilweise geschlossen sind.

12. Wegmeßgerät nach einem der Ansprüche 9 bis 11 mit einer den Träger (2) verschließenden, ein Fenster (72) für die Sicht auf die Zahlrollen (33 bis 40) aufweisenden Frontplatte (5) mit Befestigungslöchern (71), dadurch gekennzeichnet, daß am Träger (2) Zapfen (70) zum Befestigen der Frontplatte (5) angeformt, durch die Befestigungslöcher (71) der Frontplatte (5) hindurchgeführt und warmverformt sind.

## Claims

1. Travel measuring device with a potlike housing (1), which is mountable co-axially at a hub cap of a vehicle, with an about potlike carrier (2), which is borne in the housing (1) to be rotatable relative thereto, for a counting mechanism (3) with number wheels (33 to 40), the axle (56) of which is borne in the carrier (2) transversely to the rotational axis (10), which is horizontal in the installed position, of the housing (1), with a step-down gear (4), by which the relative rotation of housing (1) and carrier (2) is transmissible to the number wheels (33 to 40), wherein the step-down gear (4) displays an angled gear (27, 28) and a stepping mechanism (31, 32, 48), with at least one ball (7), which is of heavy metal, is heavier than the counting mechanism (3) and borne in a chamber of the carrier (2) to be displaceable relative to the number wheels (33 to 40) about diametrally with respect to the rotational housing axis (10), characterised thereby, that the ball (7) is arranged underneath the rotational housing axis (10) in a guide track (66), which extends partially around the rotational housing axis (10), and between two compression springs (8) arranged in the guide track (66) and the step-down gear (4) displays a wheel train (18, 22, 23) in a space between the guide track (66) and the number wheels (33 to 40).

2. Travel measuring device according to claim 1, characterised thereby, that the guide track (66) displays about the shape of a part circle.

3. Travel measuring device according to claim 1 or 2, characterised thereby, that two balls (7) are arranged between the compression springs (8).

4. Travel measuring device according to one of the claims 1 to 3, characterised thereby, that the compression springs (8) are helical springs.

5. Travel measuring device according to one of the claims 1 to 4, characterised thereby, that the material of the ball or balls (7) is steel.

6. Travel measuring device according to one of the claims 1 to 5, characterised thereby, that the ball material is diamagnetic and has a specific weight greater than that of steel.

7. Travel measuring device according to one of the claims 1 to 6, characterised thereby, that the relative rotation of housing (1) and carrier (2) is transmitted by way of the wheel train (18, 22, 23) to the angled gear (27, 28) and from this by way of the stepping mechanism (31, 23, 48) to the number wheel (33) of lowest digit position.

8. Travel measuring device according to one of the claims 1 to 7, characterised thereby, that the angled gear is a bevel wheel gear (27, 28).

9. Travel measuring device according to one of the claims 1 to 8, characterised thereby, that the carrier (2) is made of elastic synthetic material.

10. Travel measuring device according to claim 9, characterised thereby, that the last axle (25) of the wheel train (18, 22, 23) is moulded on at the base of the carrier (2).

11. Travel measuring device according to claim 9 or 10, characterised thereby, that the bearings of all axles (56, 57) of the counting mechanism (3) are pockets (58), which are open in direction of the rotational axis (10) of the housing (1) and are at least partially closed by hot deformation after introduction of these axles.

12. Travel measuring device according to one of the claims 9 to 11, with a front plate (5) with fastening holes (71), which closes the carrier (2) and displays a window (72) for a view onto the number wheels (33 to 40), characterised thereby, that spigots (70) for the fastening of the front plate (5) are moulded on at the carrier (2), led through the fastening holes (71) of the front plate (5) and hotdeformed.

## Revendications

1. Capteur de déplacement comportant un logement (1) en forme de pot qui peut être appliqué axialement sur un chapeau d'axe d'un véhicule automobile, ce capteur comportant un support (2) à peu près en forme de pot monté dans le logement (1) de façon à pouvoir tourner par rapport à ce dernier, ce support étant prévu pour un compteur (3) comportant des rouleaux de comptage (33 à 40) dont l'axe (56) est monté dans le support (2) transversalement par rapport à l'axe de rotation (10) du logement (1), cet axe occupant une position horizontale dans la position de montage, ce capteur comportant également un démultiplicateur (4) grâce auquel le mouvement de rotation relatif du logement (1) et du support (2) peut être transmis aux rouleaux de comptage (33 à 40), le démultiplicateur (4) comportant un mécanisme de renvoi (27, 28) et un mécanisme de commande pas-à-pas (31, 32, 48), ce capteur comportant également au moins une bille (7) en un métal lourd grâce à laquelle les rouleaux de comptage (33 à 40) sont montés de façon à pouvoir se déplacer à peu près diamétralement vis-à-vis de l'axe de rotation (10) du logement, dans une chambre du support (2), et qui est plus lourde que le compteur (3), caractérisé en ce que la bille (7) est disposée en dessous de l'axe de rotation (10) du logement dans une voie de guidage (66) s'étendant partiellement autour de l'axe de rotation (10) du logement, entre deux ressorts à pression (8) disposés dans cette voie de guidage (66), tandis que le démultiplicateur (4) comporte un train d'engrenages (18, 22, 23) dans un espace compris entre la voie de guidage (66) et les rouleaux de comptage (33 à 40).

2. Capteur de déplacement selon la revendication 1, caractérisé en ce que la voie de guidage (66) a à peu près la forme d'un cercle primitif de référence.

3. Capteur de déplacement selon la revendication 1 ou 2, caractérisé en ce que deux billes (7) sont disposées entre les ressorts à pression (8).

4. Capteur de déplacement selon une des revendications 1 à 3, caractérisé en ce que les ressorts à pression (8) sont des ressorts hélicoïdaux.

5. Capteur de déplacement selon une des revendications 1 à 4, caractérisé en ce que la matière dont est ou sont constituée(s) les billes (7), est l'acier.

6. Capteur de déplacement selon une des revendications 1 à 5, caractérisé en ce que la matière dont est ou sont constituée(s) la ou les billes est diamagnétique et d'un poids spécifique supérieur à celui de l'acier.

7. Capteur de déplacement selon une des revendications 1 à 6, caractérisé en ce que la rotation relative du logement (1) et du support (2) est transmise, via le train d'engrenages (18, 22, 23), au mécanisme de renvoi (27, 28) et de celui-ci, via le mécanisme de commande pas-à-pas (31, 32, 48), au rouleau de comptage (33) occupant la position la plus basse.

8. Capteur de déplacement selon une des revendications 1 à 7, caractérisé en ce que le mécanisme de renvoi est un mécanisme à roues coniques (27, 28).

9. Capteur de déplacement selon une des revendications 1 à 8, caractérisé en ce que le support (2) est réalisé en une matière synthétique élastique.

10. Capteur de déplacement selon la revendication 9, caractérisé en ce que le dernier axe (25) du train d'engrenages (18, 22, 23) est appliqué par pulvérisation sur le fond du support (2).

11. Capteur de déplacement selon la revendication 9 ou 10, caractérisé en ce que les paliers de tous les axes (56, 57) du compteur (3) sont des poches (58) ouvertes en direction de l'axe de rotation (10) du logement et qui sont du moins partiellement fermées par déformation thermique après introduction de ces axes.

12. Capteur de déplacement selon une des revendications 9 à 11, ce capteur comportant une plaque frontale (5) dans laquelle sont pratiqués des trous de fixation (71), qui ferme le support (2) et qui comporte une fenêtre (72) permettant d'observer les rouleaux de comptage (33 à 40), caractérisé en ce que, sur le support (2) sont formés des tourillons (70) destinés à fixer la plaque frontale (5), ces tourillons passant à travers les trous de fixation (71) de cette dernière et étant soumis à une déformation à chaud.

# Fig.1

# Fig. 2

Fig.3